# EUROPEAN PATENT APPLICATION

(11) **EP 4 667 362 A1**
(43) Date of publication of application: **24.12.2025**
(21) Application number: 25182470.2
(22) Date of filing: 12.06.2025
(51) Int. Cl.: B64D 37/30, A62C 3/08, B64D 37/32, F02M 21/02

(54) **IMPROVEMENTS IN HYDROGEN FLAME DETECTION**

(30) Priority: 21.06.2024 GB 202408938
(71) Applicant: Airbus Operations Limited, Bristol BS34 7PA (GB)
(72) Inventor: HODGES, Colin, Bristol, BS34 7PA (GB)
(74) Representative: Abel & Imray LLP

(57) **Abstract**

A device 120 comprising a layer 146 of resin-encapsulated carbon is disposed in the vicinity of an outlet 134 of a hydrogen vent 116. The vent 116 carries gaseous hydrogen from a hydrogen store 110 on an aircraft 100, to a location external of the aircraft 100. Upon pressure-relief of the hydrogen store 100, hydrogen travels through the vent 116 and out the outlet 134. In the event of ignition of the hydrogen, the heat of the hydrogen flame melts the resin and releases the carbon. The carbon combusts in the hydrogen flame, thus producing a visible flame. The device 120 is easily removeable and replaceable.

## Description

### BACKGROUND OF THE INVENTION

The present disclosure relates to an apparatus for aiding detection of, and method for detecting, burning hydrogen. More particularly, but not exclusively, this disclosure concerns an apparatus and method for providing an indication of burning hydrogen during a venting process from a hydrogen fuel tank for an aircraft. A hydrogen fuel tank may be carried by the aircraft for fuelling the aircraft with hydrogen during operation of the aircraft or may be situated off the aircraft to enable hydrogen fuel to be supplied to such a fuel tank on/in the aircraft.

Hydrogen has been identified as a potentially environmentally preferable alternative to traditional fossil fuels, such as kerosene, in use as a fuel source for aircraft. Some aviation technologies and operations may require relatively minor adjustments to utilise hydrogen, whereas some will require significant alterations. The fuel storage system is one of the latter, due to the considerably different requirements and characteristics of hydrogen in comparison to traditional jet fuels.

Due to its very low boiling point, liquid hydrogen storage must occur at very low temperatures and/or high pressures. It is well known in the art that hydrogen will occasionally need to be vented from hydrogen storage units, to prevent overpressure as hydrogen inside the storage unit evaporates. In industrial facilities, the vented hydrogen is typically released through a tall metal chimney. This reduces any risk associated with the hydrogen burning after it has been vented, as the chimneys channel the hydrogen far away from any danger areas, and the metal mitigates the flame risk. Burning hydrogen is not readily visible with the naked eye, and is often - for all practical purposes - near invisible. An exposed hydrogen flame, being so difficult to see with the naked eye, represents a significant safety risk. Therefore having a tall chimney mitigates the chance of accidental exposure to a hydrogen flame by personnel, vehicles, or equipment.

When an aircraft is on the ground, for example at an airport, personnel are regularly required to be in the aircraft's vicinity, for example for fuelling, maintenance, or cargo loading, so a risk exists where a hydrogen storage tank could be venting burning hydrogen and aircraft personnel may be unaware. However, the chimney solution described previously is very heavy, and very large, and is therefore unworkable for an aircraft or for fuelling vehicles for supplying hydrogen to an aircraft.

DE 102009000406 A1 discloses a high pressure hydrogen tank having a pressure relief valve arranged to discharge hydrogen from the tank once a threshold pressure is exceeded and also a flame-colouring liquid for discolouring a hydrogen flame. The flame-colouring liquid may for example comprise a soluble salt such as sodium chloride, or other salts of alkali or alkaline earth metals. The arrangement is directed for use on motor vehicles, and would not be suitable for an aircraft. Such an arrangement would require regular maintenance to ensure that the arrangement will reliably function. An adequate amount of flame-colouring liquid would need to be present, requiring a system or process for monitoring such levels, adding further complication. Further, the arrangement would take up room in the aircraft, as it would not be suitable for placing outside the aircraft without significant undesirable aerodynamic treatment and extra load carrying reinforcement structures. Lastly, the arrangement would add additional mass in an undesirable manner. A lighter solution would be needed for aircraft applications.

Other solutions, such as infrared cameras, heat detectors, and electronic sensors, are also problematic for aircraft. Providing an apparatus that can automatically and reliable distinguish between the presence / absence of a hydrogen flame, as compared to other environment factors, is not a straightforward matter, particular for use on an aircraft. For example, they may require constant power supplies and may have an unacceptably high risk of failure, including failing to detect a hydrogen flame or falsely indicating the presence of a flame when in reality there is none. Therefore, there are several competing requirements involved in solving the problem of safely venting hydrogen from an aircraft.

The present invention seeks to mitigate one or more of the above-mentioned problems. Alternatively or additionally, the present invention seeks to provide an improved hydrogen venting system and/or an improved way of detecting a hydrogen flame, preferably being suitable for use in an aerospace application.

### SUMMARY OF THE INVENTION

The present invention provides, according to a first aspect, an apparatus for aiding visual detection of a hydrogen flame. The apparatus comprises a removeable member, for example one that is configured to be repeatedly secured to a structure (for example of an aircraft) and detached from that structure. It may be that the removeable member is disposed within (and removeable from) the vicinity of a hydrogen flow path. For example, it may be that the removeable member is, in use, secured to a structure that defines the hydrogen flow path or secured to a structure local to the hydrogen flow path. The removeable member comprises a material configured to ablate in the presence of a hydrogen flame. Interaction of said material and the hydrogen flame may provide a visual indicator of the presence of a hydrogen flame. The above features may provide a simple way of passively determining combustion of hydrogen without reliance on a power supply, sensors, frangible elements, or other potentially unreliable elements. The above features may provide a lightweight alternative to previous hydrogen flame sensing methods. This may make the invention suitable for low-weight applications, such as aerospace applications. The above features may provide an easily replaceable item, which may improve ease of maintenance. Thus, in an embodiment of the present invention, the apparatus may be used on an aircraft to detect the presence of burning hydrogen through a hydrogen vent system, and may be removed and then replaced and/or replenished for future use.

The interaction of the material and the hydrogen flame providing a visual indicator may result in the visual indicator being detectable by the naked eye in a direct line of sight at a distance of up to 10 metres away, preferably whether during night or day, assuming that the local air quality does not affect local visibility significantly. This may mean that a human operating in the region of the hydrogen flow path can clearly see the presence of a hydrogen flame without any additional aids, for example an infrared camera. The interaction of the material and the hydrogen flame providing a visual indicator is preferably such that a hydrogen flame is made more visible to the naked eye at night-time and also more visible to the naked eye during the middle of the day when there is no cloud cover (e.g. when sunny).

The material may be configured to ablate in the presence of a hydrogen flame as a result of the heat and/or air disturbance caused by a hydrogen flame causing one or more portions of the material to break apart and/or break away. For example, the removeable member may be disposed close enough to (e.g. directly adjacent to or within) the hydrogen flow path that the heat and/or turbulence effects from a hydrogen flame would be sufficient to cause a change in the physical properties of at least a part of removeable member, for example causing a change in the state of matter (e.g. melting, vaporising/evaporating or subliming material). More specifically, the material may be configured to ablate when in direct contact with, partially or otherwise, a hydrogen flame.

A removeable member may be considered as being any item which is configured to be removed from its location of operation without causing damage to itself or to the item from which it is removed, so that the removeable member can later be reused and re-affixed to the location from which it is removed. For example, the removeable member may comprise at least one feature that facilitates attachment of the removeable member to, and detachment of the removeable member from, a structure located at a position in the vicinity of the hydrogen flow path. For example, said at least one feature may comprise a fixing. Said at least one feature may comprise a screw-thread for example complimentary screw threads that facilitate attachment of the removeable member to such structure. Said at least one feature may comprise a bolt and associated aperture. For example, there may be provided fixings in the form of one or more pairs of nuts and bolts.

The apparatus may be disposed on a vehicle. This apparatus may be provided in respect of a hydrogen storage system on a vehicle. The hydrogen storage system may be a fuel storage system - e.g. a fuel tank. The vehicle may be an aircraft. In this case, the hydrogen storage system may be the aircraft fuel tanks. The vehicle may be in the form of Ground Support Equipment, for example a refuel bowser and/or a refuel tanker. In this case, the hydrogen storage system may be a container on a refuel tanker, or a central reservoir connected to a refuel bowser.

The hydrogen flow path may be defined as a region via which, in use, hydrogen flows. In the case of a vehicle, the hydrogen flow path may provide fluid communication between a hydrogen storage tank (e.g. of the vehicle) and a location external of the vehicle (e.g. external of an outer surface of the vehicle). This may assist with hydrogen venting. An example of hydrogen venting is the process of removing gaseous hydrogen from a hydrogen storage tank, for example in the case of over-pressure. Establishing fluid communication between a hydrogen storage tank and a location external of the vehicle outer surface may allow hydrogen to be vented from the hydrogen storage tank into the atmosphere without the hydrogen interacting with other vehicle components. This may reduce the possibility of damage/injury in the event of hydrogen ignition. Venting to a location external of the vehicle outer surface may make it easier for a human operating in the vicinity of the vehicle to visually detect a hydrogen flame when having the benefit of using an embodiment of the present invention, for example as a result of both venting to the atmosphere exterior of the vehicle assisting in providing a direct line of sight to the hydrogen flame and the presence of the hydrogen flame being made more easily seen as a result of the visual indicator.

The hydrogen flow path may be at least partly defined by a vent having an outlet. This may mean that the direction of travel of the hydrogen along the section of the hydrogen flow path defined by a vent is determined by the shape and characteristics of the vent. For example, the hydrogen flow path may be a channel bounded circumferentially about the hydrogen's direction of travel. The hydrogen flow path may be configured to channel gaseous hydrogen and/or burning hydrogen. The hydrogen flow path may be configured to direct hydrogen away from a hydrogen storage system. The cross section of the vent portion of the hydrogen flow path may be circular, and/or an oval, and/or square. The cross-section of the vent portion of the hydrogen flow path may have a maximum dimension between 10mm and 100mm, for example between 10mm and 30mm.

The removeable member may be disposed in the vicinity of the outlet. The removeable member may be disposed in the vicinity of the outlet and at least partially within the vent. At least a part of, and optionally all of, the removeable member may be disposed downstream of the outlet (i.e. downstream relative to the direction of flow of hydrogen gas), for example directly adjacent to the outlet of the vent. It may be that ablative material of the removeable member is, in use, exposed to the hydrogen travelling via the hydrogen flow path (and/or to the associated hydrogen flame if present), without necessarily being directly within the vent section of the hydrogen flow path. For example, an item disposed immediately downstream of the outlet would still be exposed to a flow of hydrogen (and/or to the hydrogen flame), as a result of the hydrogen flow no longer being unconstrained circumferentially by the vent. The removeable member may comprise a bar or grate disposed over the outlet of the vent.

At least a part of, and optionally all of, the removeable member may be disposed within the vent. It may be that part of the removeable member is disposed within the vent and part is disposed outside the vent, for example downstream of the vent.

It is preferred that the removeable member is configured to be located in use in such a way that the amount of ablative material (which being a consumable material, may diminish over time) can be readily visually inspected, for example to enable someone performing maintenance procedures to ascertain when the removeable member needs to be replaced and/or replenished (with the addition of new ablative material). For example, having at least some of the material at or near the exterior / outlet of a vent may assist with visibility of the ablative material of the removeable member by humans operating around the vehicle, which may assist with maintenance of the removeable member.

It may be that due to the shape and positioning of the removeable member, the removeable member may form the outlet of the vent. For example, the removeable member may be attachable to the end of the vent. The removeable member may be of substantially the same cross section as the vent. The removeable member may be a sleeve configured to fit onto the end of the vent. For example, the removeable member may be a sleeve configured to fix onto the end of the vent. In the case where the removeable member is internal to the vent, the vent may be shaped so that at least part of the removeable member is visible from outside the vent. This may assist with visual inspection of the removeable member.

The removeable member may be configured to twist onto the outlet of the vent. The removeable member may be configured to be screwed onto the outlet of the vent. For example, the outlet of the vent and the removeable member may comprise corresponding screw-threads.

The removeable member may be conductively bonded to the aircraft or ground support equipment, which may reduce risk of damage during lightning strikes. For example, the removeable member may comprise a metal bonding strap or other metal part that is configured to connect conductively to a corresponding metal part of the aircraft or ground support equipment.

The outlet of the vent may be located external to an outer surface of a vehicle on which the apparatus is installed.

It is preferred that in use the removeable member does not act to impede, at least not significantly, the flow of hydrogen. The removeable member may for example be configured to permit the passage of hydrogen across, over, through and/or via the removeable member, for example before the hydrogen is released into the atmosphere. The removeable member may entrain at least part of the flow of hydrogen in use. The removeable member and/or the vent and/or other portions defining at least part of the hydrogen flow path may be made from metal, for example stainless steel. Stainless steel may for example provide resistance to different weathers, and/or may provide resistance to high temperatures in the instance of a hydrogen flame occurring. The removeable member may be made from titanium. The apparatus may be located on an aircraft tail, for example at the top of the aircraft vertical stabiliser, for example at the top and the back of the aircraft vertical stabiliser. Thus the outlet of the above-mentioned vent, if present, may be located on the aircraft tail. This may be the highest point on the aircraft. This may be the part of the aircraft most remote from human activity, for example passenger boarding, maintenance etc. This may provide the most direct route for hydrogen to discharge into the atmosphere. This may also be a highly visible point on the aircraft, e.g. due to its height and location, it is visible for people in many locations about the aircraft. This may assist in ensuring a direct line of sight to the hydrogen flame if and when it occurs.

The material configured to ablate in the presence of a hydrogen flame may be a material powder. For example, the material configured to ablate in the presence of a hydrogen flame may be comprised of small discrete portions of material. The material powder configured to ablate may be a granular material, and/or a ground material, and/or a particulate material. It will be appreciated that the term 'powder' is intended to capture all of these example forms. The material being a powder may ensure thorough mixing of the ablative material within the hydrogen flame, and/or may assist with ablation of the material. This may improve visibility of the hydrogen flame. This may provide a level of visibility of discharged hydrogen even when the hydrogen is not combusting. The size of the discrete portions of material may have an average maximum dimension between 0.5 µm to 5mm, for example between 1µm and 1mm, for example between 1µm and 100µm. The size of the discrete portions of the material may have an average dimension that is less than 1mm, for example less than 0.1mm. The average surface area of the discrete portions of material may be between 10µm² and 1mm², for example between 10µm² and 0.1mm², for example between 10µm² and 0.001mm². Average particle size can be ascertained with a variety of commonly known methods, e.g. microscopy, sieving, sedimentation.

The material configured to ablate in the presence of a hydrogen flame may be at least 50% elemental carbon by mass, for example at least 70%, for example at least 80%. The material configured to ablate in the presence of a hydrogen flame may be at least 90% elemental carbon by mass. The carbon may be in the form of graphite, for example graphite powder. The carbon may comprise coke or be made from coke. The carbon may be in the form of activated carbon. Carbon may burn brightly. This may improve visibility of the hydrogen flame to the naked eye. Carbon may also be beneficial for other reasons including but not limited to: low weight, low cost, simplicity, and environmental compatibility. Environmental compatibility may mean that the material will not negatively or unexpectedly interact with other surrounding materials on the apparatus, vehicle, or surrounding infrastructure. Alternatively or additionally, the material configured to ablate in the presence of a hydrogen flame may be a metal.

The material configured to ablate in the presence of a hydrogen flame may be held to the removeable member by an adhesive material. The adhesive material may encapsulate the material configured to ablate in the presence of a hydrogen flame. The adhesive material may be a resin, for example an epoxy-resin. Thus, in some embodiments, the removeable member may comprise resin-encapsulated carbon. The adhesive material may also be configured to ablate in the presence of the hydrogen flame. Use of resins may be low cost and simple for manufacture. The material configured to ablate in the presence of a hydrogen flame may be in the form of particulate material distributed and held within a resin matrix.

The removeable member may comprise a visually distinct material disposed beneath a region comprising the material configured to ablate in the presence of a hydrogen flame, said visually distinct material having an appearance which is distinct from said region. For example, said visually distinct material may be visually distinct from the adhesive material, if provided (and/or be visually distinct from the adhesive material in combination with the material configured to ablate in the presence of a hydrogen flame). Said visually distinct material may be visually distinct from the material, in said region above, which is configured to ablate in the presence of a hydrogen flame. The visually distinct material may be visually distinct in that it has a different colour. As and when the visually distinct material becomes visible, this may serve as a clear indication that the removeable member then needs to be replaced and/or replenished. The visually distinct material may form part of the removeable member that is not configured to ablate in the presence of a hydrogen flame, for example the removeable member having a coloured surface which may be at the surface of a metal structure of the removeable member. There may be at least a further layer of material configured to ablate in the presence of a hydrogen flame formed by and/or beneath the visually distinct material. The visually distinct material may comprise a metal. Alternatively or additionally, the visually distinct material may also be configured to ablate in the presence of a hydrogen flame and may for example be configured to produce a different colour flame from the colour of the flame caused by the ablating of the material in the region above the visually distinct material. This may provide a further visual indication that the removeable member needs to be replaced and/or replenished. There may be multiple layers of ablative material differentiated by differing layers of visually distinct material, for example a first layer having a first colour/appearance, with a second layer having a second colour/appearance, and optionally a third layer having a third colour/appearance, wherein the layers may be comprised of ablative material and optionally adhesive material, and wherein each layer is visually distinct from each other layer.

An embodiment of the present invention is provided by a removeable member in the form of a sleeve fixed to a hydrogen vent on an aircraft, the sleeve being internally coated with a layer of resin-encapsulated carbon, beneath which is provided a layer of further visually distinct material. The outlet of the hydrogen vent may be shaped such that at least a portion of the sleeve is visible externally from the hydrogen vent. The resin-encapsulated carbon may be configured to ablate in the presence of a hydrogen flame. Beneficially, this may make the hydrogen flame visible, and (once the layer of resin-encapsulated carbon has been consumed to the extent that the layer beneath becomes visible) provide a clear indication to staff and/or other people in the vicinity of the aircraft that almost all of the resin-encapsulated carbon has ablated from the removeable member, and that the removeable member should soon be removed and replaced and/or replenished.

According to a second aspect of the present invention there is provided a method of visually determining the presence or absence of a hydrogen flame caused during hydrogen venting from the fuel system of a vehicle, for example an aircraft or a piece of ground support equipment. The method may use the apparatus described according to the first aspect. The method may comprise viewing a region that includes an outlet of a vent through which the hydrogen is vented. The method may comprise determining whether a hydrogen flame is present in that region in dependence on the presence or absence of a visual indication. The visual indication may be caused by interaction between the hydrogen flame and a consumable material which is disposed within the region and which ablates in the presence of a hydrogen flame. This may provide a method of passive detection, which does not rely on the provision of power or electronic circuits. This may provide a robust detection method. This detection method may be performed by anyone in the vicinity of the aircraft. This may be beneficial for people operating in the vicinity of the aircraft.

The method may further comprise the consumable material being located on a removeable member. This may allow for the effective replenishment of the consumable material by replacing the removeable member with a removeable member having consumable material. The removeable member may be disposed within the vicinity of the outlet of the vent. This may allow for easy inspection of the removeable member, for example to allow for judging when the removeable member should be replaced/replenished.

The method may further comprise the hydrogen flame being determined as being present in the region in dependence on visual observation of a coloured flame caused by combustion of ablated consumable material. This may provide a clear and/or recognisable indication of the presence of a flame.

The method may be performed in respect of hydrogen being vented from an aircraft hydrogen fuel tank. This may alleviate a risk anticipated for passive over-pressure relief systems for hydrogen fuel tanks on aircraft.

According to a third aspect of the present invention there is provided a method of maintaining a flame detection system. This method may use the apparatus of the first aspect, and/or may be performed in respect of the method of the second aspect. The method may comprise removing a first removeable member from a hydrogen flow path, and replacing the first removeable member with a second removeable member. The second removeable member may have a greater quantity of ablative material than the first removeable member. The ablative material may be configured to interact with a hydrogen flame to produce a visual indication of the presence of the hydrogen flame. This may provide a quick maintenance system for a hydrogen flame visual detection apparatus.

The step of replacing the first removeable member with a second removeable member may comprise using at least part of the first removeable member to make the second removeable member, for example by adding ablative material to the first removeable member.

The first removeable member may be a spent removeable member, for example a removeable member comprising a quantity of ablative material considered too low for continued operation. The second removeable member may be a fresh removeable member, for example a new removeable member.

Removing the first removeable member may comprise unscrewing the first removeable member. Alternatively or additionally, removing the first removeable member may comprise undoing fixings on the first removeable member. Replacing with a second removeable member may comprise screwing the second removeable member. Alternatively or additionally, replacing with a second removeable member may comprise securing fixings on the second removeable member.

The method may further comprise determining whether to replace the removeable member in dependence on the colour of a material visible on the removeable member, wherein the visible colour provides an indication of the quantity of ablative material on the removeable member. The ability to see the visible colour may for example indicate that sufficient ablative material has been consumed for there to be a need (whether imminent or less urgent, but nevertheless still advisable) to replace the removeable member. The colour may only be clearly visible once a quantity of ablative material has ablated, thus revealing a differently coloured material beneath. This may be a simple way to ascertain whether the removeable member needs replacing. Alternatively or additionally, determining whether to replace the removeable member may be performed by assessing the colour of the hydrogen flame.

The step of removing the first removeable member may include a step of venting hydrogen via the hydrogen flow path. This may be performed immediately before a person enters the vicinity of the hydrogen flow path to remove the first removeable member. This may reduce the risk of hydrogen venting during the removing step. For example, in the case where the method is performed in respect of a passive overpressure relief system for a hydrogen storage tank, venting hydrogen would reduce the pressure in the hydrogen storage tank such that another venting process would not occur during removal of the first removeable member and replacement with the second removeable member. This step may comprise one or more people moving from the vicinity of the hydrogen flow path prior to venting the hydrogen. It will be understood that intentional hydrogen vents can occur whenever considered necessary, for example at other times during this method, such as directly before a person enters the vicinity of the hydrogen flow path to replace or inspect the removeable member.

There may also be provided a method of manufacturing or replenishing a removeable member, comprising sealing ablative material to the removeable member with an adhesive material. This step may further comprise encasing the ablative material with an adhesive material. The adhesive material may be in the form of a fluid which solidifies. The adhesive material may be a thermosetting material which cures about the ablative material. This may be a simple way of sealing the ablative material to the first removeable member. This method may replenish a spent removeable member such that is becomes a fresh removeable member, suitable for re-use. It will be understood that the way in which the sealing of the ablative material to the removeable member is achieved with the adhesive material, needs to allow for ablation of the ablative material in the presence of a hydrogen flame (e.g. such that adhesive material releases the ablative material and/or ablates with the ablative material).

In this way, the removeable members could be cycled, i.e. as one removeable member is being replenished, another could be in operation, so that when the removeable member in operation needs replenishing, there is another immediately available. It could however be the case that the removeable members are a single use part, and when one removeable member is removed it is replaced with an entirely new removeable member.

In the case of replenishing a spent removeable member, the step of adding ablative material to the spent removeable member may initially comprise removing any remaining ablative or adhesive material still present on the spent removeable member prior to adding ablative material. This may provide a clean surface upon which to add ablative material, which may assist with achieving an even distribution of ablative material on the spent removeable member.

The adhesive material may cease sealing of the ablative material to the removeable member by melting and/or may ablating, which may remove any retaining force between the ablative material and the removeable member. This may be a simple way of ensuring that the ablative material is dispersed when the removeable member is under the temperature conditions of a hydrogen flame.

The above method may be performed in respect of a hydrogen fuel system for an aircraft. Therefore, in certain embodiments of the invention there may be provided an apparatus and/or a method for visually detecting from the appearance of a removeable member whether the removeable member needs replacing or replenishing, the removeable member being positioned in a hydrogen flow path for a passive over-pressure relief system for hydrogen storage on an aircraft and comprising ablative material for the purpose of flame detection. Upon detection of the need for replacement of the removeable member, hydrogen may be vented through the hydrogen flow path, followed by removal and replenishment of the removeable member. Replenishment of the removeable member may comprise encasing particulate carbon to the removeable member with a thermosetting epoxy resin. The replenished removeable member may then be returned into the hydrogen flow path, optionally following a further hydrogen vent, and/or following a life cycle of another identical removeable member.

According to a fourth aspect of the present invention there is provided an aircraft fuel system incorporating the apparatus of the first aspect of the present invention, or an aircraft fuel system configured for use in the method of the second or third aspects of the present invention.

According to a fifth aspect of the present invention there is provided an aircraft or ground service equipment incorporating an aircraft fuel system according to the fourth aspect of the present invention.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
- Figure 1: shows a view of an aircraft and a piece of GSE with hydrogen storage tanks according to a first embodiment of the invention;
- Figure 2: shows a view of an aircraft tail with device attached according to a first embodiment of the present invention;
- Figure 3: shows a view of an aircraft tail with device and fairing attached according to an embodiment of the present invention;
- Figure 4: shows a view of a portion of a hydrogen vent with a removeable device according to an embodiment of the present invention;
- Figure 5: shows a view of a portion of a hydrogen vent with a removeable device according to an embodiment of the present invention;
- Figure 6: shows a detailed cross-section view of a removeable device according to an embodiment of the present invention;
- Figure 7: shows a detailed cross-section view of a removeable device according to an embodiment of the present invention;
- Figure 8: shows a view of a removeable device according to an embodiment of the present invention;
- Figure 9: shows a portion of a hydrogen vent with a removeable device according to an embodiment of the present invention;
- Figure 10: shows a detailed cross-section view of a removeable device according to an embodiment of the present invention;
- Figure 11: shows a flow diagram illustrating a method according to an embodiment of the present invention; and
- Figure 12: shows a flow diagram illustrating a method according to an embodiment of the present invention.

### DETAILED DESCRIPTION

Embodiments of the present invention relate to a hydrogen flame visualisation aid for aerospace applications. In use of the embodiments, a removeable device is disposed at the outlet of a hydrogen vent connected to a store of hydrogen. When hydrogen passes from the store through the vent and ignites, ablative material located on the removeable device ablates and is entrained by the hydrogen flame, burning and thus making the flame visible to the naked eye. This provides a clear indication to those working in the vicinity of the hydrogen store that a hydrogen flame is present.

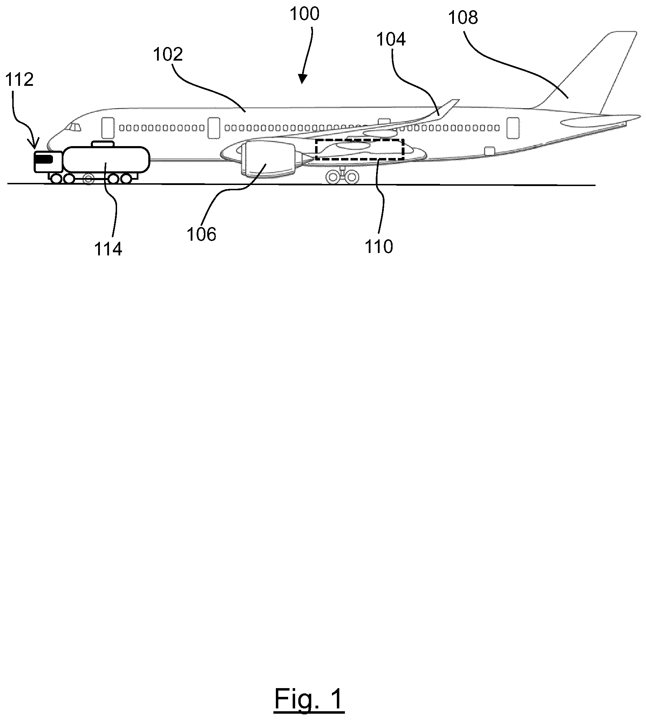

Figure 1 shows a hydrogen-powered aircraft 100 comprising a fuselage 102, wings 104, engines 106, and tail 108. A hydrogen fuel tank (schematically represented by the box 110 in Figure 1) stores liquid hydrogen for use as fuel for the engines 106. Figure 1 also shows a piece of Ground Support Equipment (GSE) 112, comprising a store of hydrogen 114. In other embodiments, the GSE may not comprise a store of hydrogen 114, but may have a pump configured to pump hydrogen from a central airport hydrogen store.

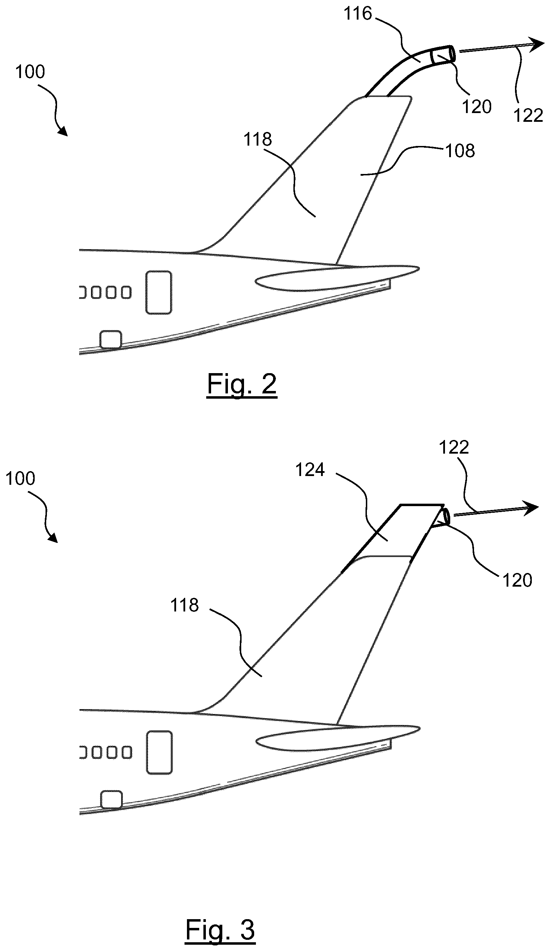

Figure 2 shows a portion of a hydrogen vent 116, located on the vertical stabiliser 118 of an aircraft tail 108. It will be appreciated that only a section of the aircraft 100 is shown for clarity. The hydrogen is connected at its other end to the hydrogen fuel tank 110 of Figure 1 (not pictured in Figure 2). It will be appreciated that the only part of the hydrogen vent 116 visible in Figure 2 is the part external to the aircraft, and that the vent extends inside the aircraft 100.

A device 120 according to a first embodiment of the present invention is attached to the end of the hydrogen vent 116. The hydrogen vent 116 is positioned such that hydrogen exiting the vent 116 is ejected away from the aircraft 100, as indicated by arrow 122. In embodiments, the device 120 may further direct hydrogen away from the aircraft in cooperation with the vent 116. This vent location is considered beneficial as it is located on a remote extremity of the aircraft (i.e. the highest point and further point rearwards), and therefore is remote from human operators and provides an easy way to direct hydrogen away from the aircraft.

Figure 3 shows a variation of the first embodiment in which the vertical stabiliser 118 comprises a fairing 124. This fairing 124 contains a hydrogen vent (not visible), such as that shown in Figure 2, such that only the device 120 is present externally of the fairing 124. Again, arrow 122 shows the direction of hydrogen ejection, away from the aircraft 100. The fairing 124 protects the hydrogen vent (not visible) and prevents unwanted aerodynamic effects which may be caused by the vent. It will be understood that the fairing 124 is provided in the instance where the vent is partly exposed from the vertical stabiliser 118. However, in embodiments the entire vent may be disposed within the vertical stabiliser 118 such that only the device 120 is exposed, and the fairing 124 may thus not be necessary.

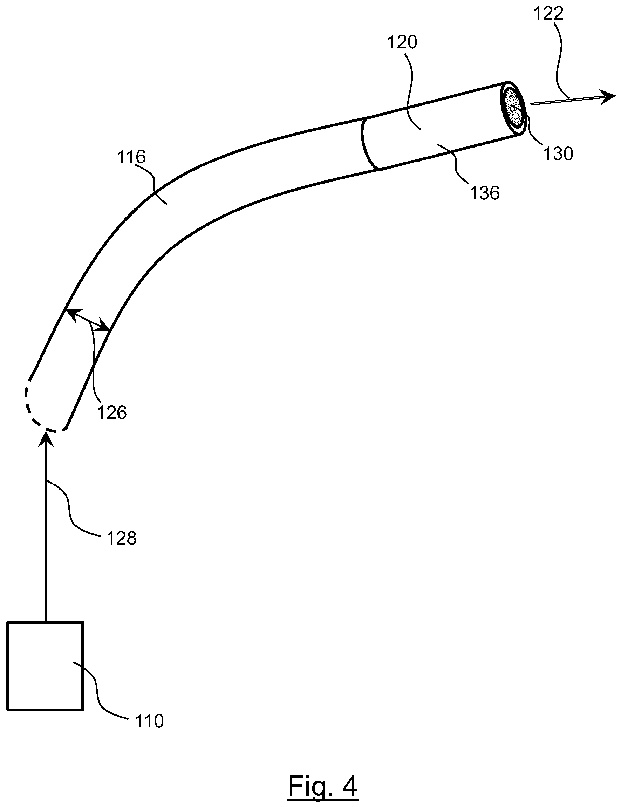

Figure 4 shows a view of a portion of the hydrogen vent 116 and the device 120 in isolation according to the first embodiment of the present invention. As can be seen, the hydrogen vent 116 has a circular cross section, with a constant diameter of 15mm as indicated by double-headed arrow 126. Hydrogen flows through the device from a store of hydrogen 110, as indicated by arrow 128. The device 120 has a main body (or base body) 136 in the general form of an open-ended cylinder, to allow the passage of hydrogen from the vent 116, through and out the device 120 via the device's outlet 130, as indicated by arrow 122. It will be seen that the outlet 130 takes the form of the open end of the base body 136. There is an electrically conductive bond between the aircraft (not visible in Figure 4) and the device 120, to protect against lightning strikes. In the present embodiment, this is achieved with there being an electrically conductive connection between the device 120 and the main body of the vent 116 via the physical connection therebetween and an electrically conductive connection between the main body of the vent 116 and the aircraft. There may also be an additional bonding strap provided (not shown), for example between the device 120 and the main body of the vent 116 and/or the aircraft or a part attached to the aircraft.

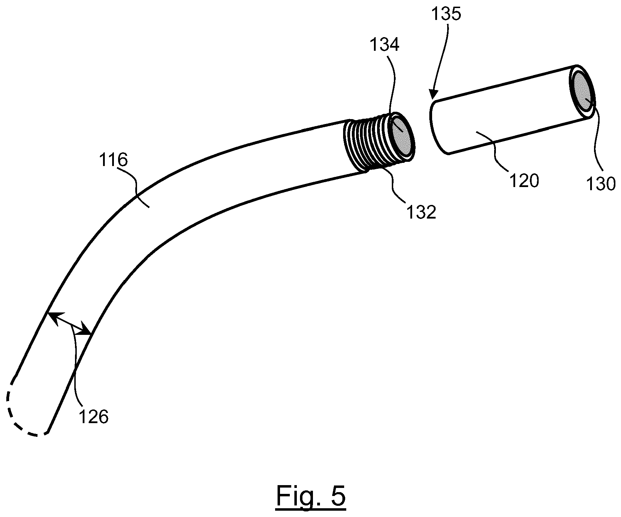

Figure 5 shows an exploded view of the portion of the hydrogen vent 116 and device 120 of Figure 4. As can be seen, the end of the hydrogen vent 116 consists of a reduced-diameter threaded section 132 (the diameter being reduced relative to the diameter 126 of the vent 116). At the end of the threaded section 132 there is an outlet 134 through which hydrogen can flow. The end 135 of the device 120 opposite to the device's outlet 130 (i.e. the end 135 closest to the threaded section 132 in Figure 5) comprises an internal thread (not visible). This internal thread complements the threaded section 132 of the vent 116 such that the device 120 can be removably screwed onto the vent 116 as in the arrangement shown in Figure 4. This is beneficial for convenience of allowing the device to be readily installed and removed, can assist with the aforementioned electrically conductive connection, and allows the device 120 to further direct the hydrogen flow away from the aircraft (not shown).

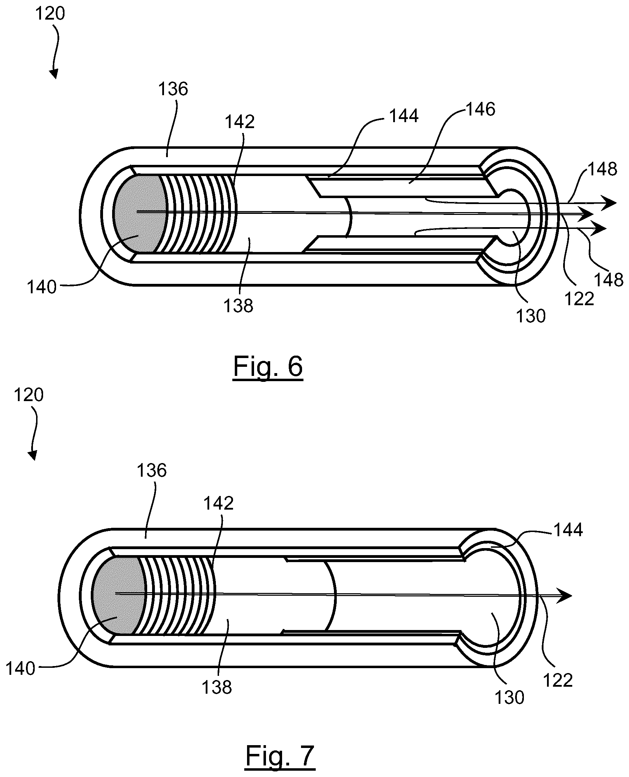

Figure 6 shows a section-view of the device 120. It can be seen that the device 120 is an open-ended cylinder, with various internal features which will now be described. The open ended cylinder section is considered the base body 136 of the device, with internal wall 138. The base body 136 of the device 120 is made from stainless steel. Hydrogen flows through the device 120 as indicated by arrow 122. At one end of the device 120, at the left of the page, is the inlet 140 to the device 120, indicated by dark shading. The inlet 140 is thus formed by an open end of the device 120. The internal wall 138 of the base body 136 comprises an internal thread 142 located adjacent to the inlet 140. This internal thread 142 complements a corresponding thread (such as thread 132 in Figure 5) on a hydrogen vent (such as vent 116 in Figure 5) such that the device 120 can be screwed on and off of the vent. The internal thread 142 is located on the internal wall 138 of the device 120.

The internal wall 138 comprises a covered portion where the internal wall 138 is covered by a first layer 144 and a second layer 146. Whilst a gap in a longitudinal direction (i.e. a direction parallel to arrow 122) between the internal thread 142 and the layers 144 and 146 is displayed in Figure 6, it will be understood that these layers may be immediately adjacent to the internal thread 142, i.e. no gap. Both layers 144 and 146 have a circular cross section, and take the form of open-ended cylinders. The length, measured along the longitudinal axis of the device 120, of the layers, is approximately half that of the device 120. The first layer 144 is disposed directly against the internal wall 138. The second layer 146 is disposed directly against the first layer 144. The thickness of the first layer 144 is approximately one-third of the thickness of second layer 146 (the thickness of a layer being measured radially - i.e. in a direction perpendicular to the longitudinal axis of the cylinder.

The second layer 146 is comprised of resin-encapsulated carbon. This comprises powdered carbon (with average particle size of about 0.5mm) which is sealed to the first layer by an epoxy-resin. The carbon is at least 80% elemental carbon by mass. In use, hydrogen flowing through the device may ignite resulting in a hydrogen flame. As ignited hydrogen travels through the device 120, heat from the flame causes the epoxy resin to be heated and to melt, thus releasing the carbon. The carbon is entrained by the flow of hydrogen and is carried out of the device via outlet 130, as indicated by arrows 148. The carbon entrained by the hydrogen burns in the heat of the hydrogen flame, thus producing a visible flame when hydrogen passes through the device 120 and is ignited. Thus, in use of the embodiment on an aircraft - in an application where the possibility of venting hydrogen being ignited cannot be ruled out, for example - the safety of personnel can be improved by means of significantly improving the visibility of burning hydrogen with the naked eye, as a result of colouring the hydrogen flame with carbon particles which ablate from the interior of the device 120 in the event that hydrogen passing via the device 120 ignites and which burn in the hydrogen flame with a distinct colour.

When using the device 120 on an aircraft as a safety feature, it is beneficial to be able to maintain and service the device 120 in an appropriate manner. How this is achieved will now be explained. In the event of hydrogen being ignited, the hydrogen flame entrains carbon and resin from the second layer 146 and carries it out of the outlet 130 removing material from within the device. Therefore eventually there will be little to no second layer 146 remaining. This situation is displayed in Figure 7. When the second layer 146 has been depleted, the first layer 144 is uncovered. The first layer 144 is comprised of a coloured material, visually distinct from the resin-encapsulated carbon (for example with the use of a differently coloured resin, a dye or the like). Therefore, a quick visual inspection of the device 120 indicates the quantity of resin-encapsulated carbon present on the device 120, and in particular whether the second layer 146 (the layer that ablates and is consumed first) has been depleted or is close to depletion (depending on how much of the first layer, underneath the second layer, is visible). In this embodiment, the first layer 144 also comprises resin-encapsulated carbon so that the device 120 can still function for a short period of time after all of the second layer 146 has been consumed. Once the first layer 144 is visible, the entire device may be removed and replaced with a new device 120 as in Figure 6 having complete and unused first and second layers 144, 146 of material. Having a hydrogen flame safety device 120 which is readily removable for replacement / servicing, and which has an integrated visual indicator that prompts such replacement / servicing, in a relatively simple compact and low-mass apparatus, with no electronics or moving parts in use, is particularly beneficial in an aerospace application.

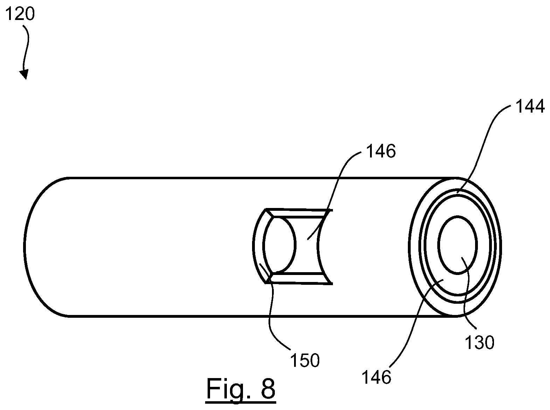

Figure 8 shows an external view of a further variation of the first embodiment of the device 120. As can be seen, the first and second layers 144 and 146 are present. The device comprises a cut-out window 150 allowing for the inside of the device 120 to be viewed. It will be understood that the first and second layers 144 and 146 of Figure 6 will not be present over the cut-out window 150 so that the inside of the device 120 can be viewed. Therefore, an indication of the quantity of the second layer 146 can be ascertained from a distance, and without having to look directly down the device 120 from the outlet 130. However, it will be understood that the cut-out window 150 is an optional feature and the device 120 could alternatively have a completely enclosed circumferential wall. It will further be understood that the shape and position of the cut-out window 150 may be varied, and may extend to the end of the device 120 which comprises the outlet 130.

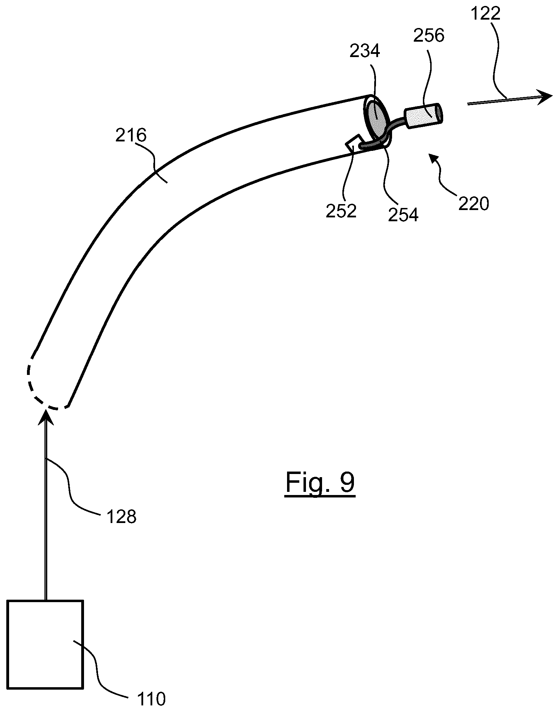

Figure 9 shows a portion of a vent 216 and a device 220 according to a second embodiment of the present invention. Again, hydrogen flows from a hydrogen store 110 into the portion of vent 216 as indicated by arrow 128. The hydrogen exits the vent 216 via outlet 234, as indicated by arrow 122. The device 220 comprises a mounting plate 252, a bayonet 254 connected to the mounting plate 252, and an external ablative section 256 disposed at the end of the bayonet 254. The mounting plate 252 mounts the device 220 to the vent 216. The mounting plate is disposed on an outer surface of the vent 216 in this embodiment, but may be disposed on an inside surface of the vent 216. The bayonet 254 is shaped so as to position the external ablative section 256 over the outlet 234 of the vent, thus ensuring interaction between the ablative section 256 and the hydrogen without impeding the hydrogen flow. Further, this disposes the ablative section so that it is clearly visible to people in the vicinity of the aircraft. It will be apparent in this embodiment that the vent 216 does not comprise a threaded section, due to the different mounting technique for the device. The vent 216 may alternatively or additionally comprise a location for the mounting plate 252 to be attached, disposed on the inside or outside surface of the vent 216. This provides an electrically conductive bond between the aircraft (not visible in Figure 9) and the device 220, to protect against lightning strikes.

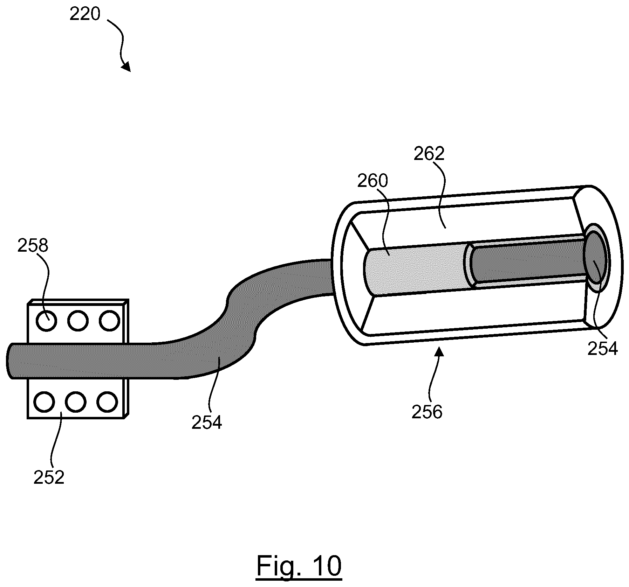

Figure 10 shows the device 220 of Figure 9 in close-up detail. A portion of the ablative section 256 is in a sectional view. The mounting plate 252 comprises a number of fixing locations 258 for the placement of fixers such as screws. Therefore, the device 220 can easily be fixed to and removed from the vent 216. The bayonet 254 is made up of two straight sections connected by a curved section. One straight section is connected to the mounting plate. The ablative section 256, is formed around the other straight section of the bayonet 254. The bayonet 254 is made of steel.

The ablative section 256 comprises two layers built circumferentially around a section of the bayonet 254. There is a first layer 260 and second layer 262, the first layer 260 being disposed directly on the bayonet 254 and the second layer 262 being disposed on the first layer 260. Similarly to the embodiment of Figure 6, the second layer 262 comprises resin-encapsulated carbon, and the first layer 260 is comprised of a coloured material, visually distinct from the resin-encapsulated carbon. Therefore, as in the embodiment of Figure 6, it will be visually apparent when the resin-encapsulated carbon has fully ablated due to combusting hydrogen, as the distinctly coloured material of the first layer 260 will be visible. In a variation of this second embodiment, the first layer 260 is omitted. As the appearance of the steel of the bayonet 254 is itself visually distinct from the resin-encapsulated carbon of the second layer 262, depletion of the second layer 262 and the need to replace / replenish the device 220 can be visually detected once the steel outer surface of the bayonet 254, that would otherwise be covered by the second layer 262, becomes visible.

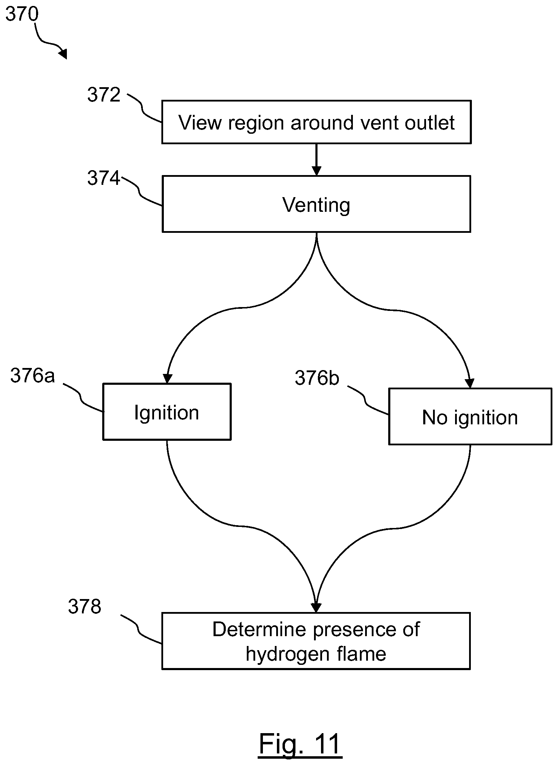

Figure 11 shows a flow diagram illustrating a method 370 according to a further embodiment of the present invention, which could utilise the apparatus of any previous embodiment. The method is performed in respect of hydrogen flame detection on an aircraft or a piece of GSE. Furthermore, the method is performed in respect of hydrogen venting from a hydrogen fuel supply. The method comprises the step of manually viewing 372 a region about a vent outlet. The vent is connected at one end to a store of hydrogen on the aircraft or GSE. The other end of the vent comprises an outlet. This outlet is disposed externally to the aircraft or GSE. Therefore, this step can be performed by an individual in the vicinity of the aircraft or GSE, such as a maintenance worker. The method further comprises the step of venting 374 hydrogen gas from the hydrogen fuel supply. This is typically a passive occurrence, when the pressure in a hydrogen fuel supply becomes too high that a vent is required. However, it can also be performed manually.

The hydrogen flows through the vent towards the vent outlet. At the vent outlet, as the hydrogen encounters more atmospheric air, there is a chance of the hydrogen igniting 376a. In this event, the new hydrogen flame encounters a removeable device comprising resin-encapsulated powdered carbon. The heat of the hydrogen flame melts the resin, thus releasing the powdered carbon. This powdered carbon is entrained by the hydrogen flame and is carried beyond the removeable device. The powdered carbon, so ablated from the removeable device, simultaneously combusts due to the heat of the hydrogen flame, producing a visible flame.

The hydrogen may not always ignite 376b. In this event, the hydrogen simply passes through the device without entraining any carbon, and no flame, visible or otherwise, is produced.

The method further comprises the step of determining 378 the presence of a hydrogen flame. This step is performed by a person present in the vicinity either seeing or not seeing a flame caused by burning carbon as described above. If burning carbon is visible, then it can be assumed that a hydrogen flame is present. If not, it can be assumed that no hydrogen flame is present.

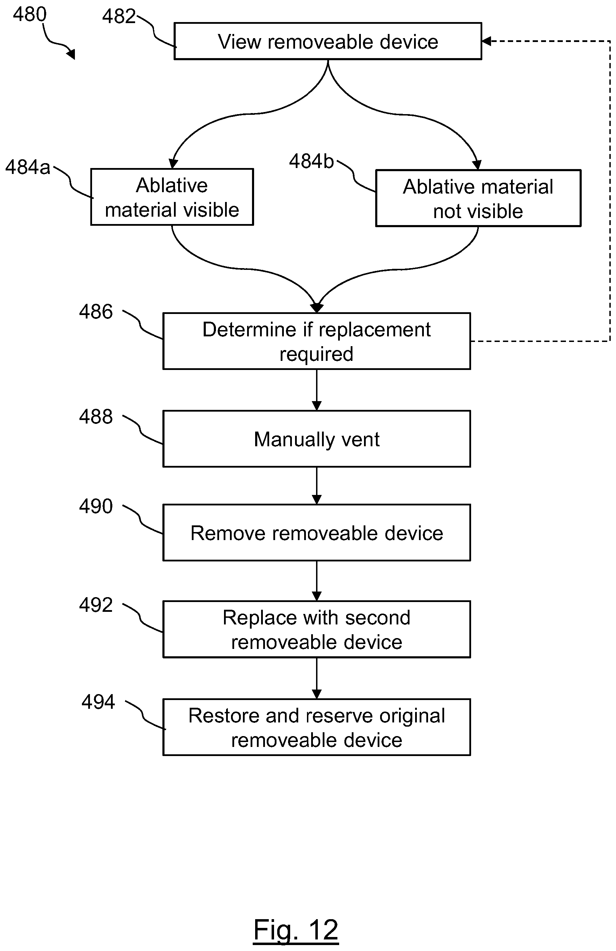

Figure 12 shows a flow diagram illustrating a method 480 according to a yet further embodiment of the present invention. This method is performed in respect of maintaining a flame detection system. More specifically, this method is performed in respect of maintaining a flame detection system for an aircraft and/or a piece of GSE.

The method comprises viewing 482 a removeable device. As previously described, this device is disposed in the vicinity of a hydrogen vent with an outlet at one end external to an aircraft or GSE, the vent being connected at the other end to a store of hydrogen. As the device is external to the aircraft or GSE, it can be viewed by people in the vicinity of the aircraft or GSE. Viewing of the device may result in either ablative material being visible 484a or ablative material not being visible 484b. The difference may be determined based on the visual appearance, for example the colour, of the material viewable on or in the removeable device. The ablative material has a distinct colour compared to the material beneath it, so it is clear upon visual inspection whether there is ablative material present or not.

The method further comprises the step of determining 486 if the removeable device requires replacing. If there is little to no ablative material visible after completion of step 482, the removeable device requires replacing. The rest of the method is performed on the basis that the removeable device does require replacing. Otherwise, steps 482 to 486 can be repeated until replacement is required.

The method further comprises the step of manually venting 488 hydrogen from the fuel tank. This is to reduce the possibility of hydrogen passively venting when performing the subsequent steps. This manual venting step 488 may be repeated as necessary.

The method further comprises the step of removing 490 the removeable device. The device is readily removeable, for example by screwing the device off or unscrewing bolts holding a mounting bracket of the device in place.

The method further comprises the step of replacing 492 the device with a second removeable device. This second device is identical to the original removeable device except that it has a greater quantity of ablative material present. This second removeable device is attached for example by screwing it onto the vent, or screwing in bolts to a mounting bracket on the second removeable device to hold it in place on the vent.

The method further comprises the step of restoring and reserving 494 the original removeable device for future use. This step further comprises adding more ablative material to the removeable device. This comprises sealing ablative material to the removeable device with an adhesive material. For example, this comprises sealing powdered carbon to the device by sealing it in an epoxy-resin. This original device is then restored and can be re-used when another removeable device needs replacing.

The above embodiment may be considered as an example of an apparatus for aiding visual detection of a hydrogen flame, the apparatus comprising a body having at least one feature - e.g. fixing - that facilitates attachment of the body to, and detachment of the body from, a structure that in use defines a hydrogen flow path, wherein the apparatus comprises consumable material secured to the body, the consumable material comprising ablating material which is arranged such that when, in use, hydrogen flowing along the hydrogen flow path combusts, the ablating material ablates in a manner which provides a visual indication of the combusting hydrogen. The ablating material may for example be in the form of resin-encapsulated carbon.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The embodiments described above are primarily directed towards use on a hydrogen-powered aircraft. However, the embodiments would also be suitable for use on an aircraft that is partly powered with the use of hydrogen and on a piece of GSE. Hydrogen may be used as a fuel on an aircraft via the use of fuel cells that generate electricity that drives electrically powered engines on an aircraft.

The device 120 is shown to have an internal thread, and the vent 116 an external thread. However, the device 120 could comprise an external thread, and the vent 116 comprise an internal thread. Further, it is conceivable that other fixing methods could be employed to attach the device 120 and the vent 116 to each other, for example a latch arrangement, or simply traditional fasteners.

In some embodiments the first layer of visually distinct material (under the second layer that is consumed / ablates first) may not be present. The second layer comprising resin-encapsulated carbon could be disposed directly against the inside wall, or bayonet (depending on the embodiment). In these cases, the inside wall/bayonet may be coloured distinctly from the resin-encapsulated carbon to provide a visual indication that the carbon is used up.

The removeable device may not necessarily be restored after use. It may be more cost/time/environmentally effective to discard the first removeable device and replace it with a new removeable device.

The following clauses set out various combinations of subject matter which are considered to be within the scope of the present patent application:
Clause 1. An apparatus for aiding visual detection of a hydrogen flame, the apparatus comprising a removeable member disposed within the vicinity of a hydrogen flow path and configured to be removeable from the hydrogen flow path, the removeable member comprising a material configured to ablate in the presence of a hydrogen flame, such that interaction of the material and the hydrogen flame provides a visual indicator of the presence of the hydrogen flame.
Clause 2. The apparatus according to clause 1, wherein the apparatus is disposed on a vehicle.
Clause 3. The apparatus according to clause 2, wherein the vehicle is one from a group of an aircraft and a piece of ground support equipment.
Clause 4. The apparatus according to clause 2 or clause 3, wherein the hydrogen flow path provides fluid communication between a hydrogen storage tank and a location external of the vehicle outer surface.
Clause 5. The apparatus according to any preceding clause, wherein the hydrogen flow path is at least partly defined by a vent having an outlet.
Clause 6. The apparatus according to clause 5, wherein the removeable member is disposed in the vicinity of the outlet.
Clause 7. The apparatus according to clause 6, wherein at least part of the removeable member is disposed downstream of the outlet.
Clause 8. The apparatus according to any of clauses 5 to 7, wherein the outlet is located on an aircraft tail.
Clause 9. The apparatus according to any preceding clause, wherein the material configured to ablate in the presence of a hydrogen flame is a material powder.
Clause 10. The apparatus according to any preceding clause, wherein the material configured to ablate in the presence of a hydrogen flame is at least 80% elemental carbon by mass.
Clause 11. The apparatus according to any preceding clause, wherein the material configured to ablate in the presence of a hydrogen flame is held relative to the removeable member by an adhesive material.
Clause 12. The apparatus according to any preceding clause, wherein the material configured to ablate in the presence of a hydrogen flame is in the form of particulate material distributed and held within a resin matrix.
Clause 13. The apparatus according to any preceding clause, wherein the removeable member comprises a visually distinct material disposed beneath a region comprising the material configured to ablate in the presence of a hydrogen flame, said visually distinct material having an appearance which is distinct from said region.
Clause 14. A method of visually determining the presence or absence of a hydrogen flame caused during hydrogen venting from the fuel system of a vehicle, the vehicle being one of an aircraft and a piece of ground support equipment, the method comprising viewing a region including an outlet of a vent through which the hydrogen is vented, and determining whether a hydrogen flame is present or absent in that region in dependence on the presence or absence of a visual indication caused by interaction between the hydrogen flame and a consumable material which is disposed within the region and which ablates in the presence of a hydrogen flame.
Clause 15. The method of clause 14, wherein the consumable material is located on a removeable member disposed in the vicinity of the outlet of the vent.
Clause 16. The method of clause 14 or 15, wherein the hydrogen flame is determined as being present in the region in dependence on visual observation of a coloured flame caused by combustion of ablated consumable material.
Clause 17. A method of maintaining a flame detection system, the method comprising removing a first removeable member from a hydrogen flow path, and replacing the first removeable member with a second removeable member, the second removeable member having a greater quantity of ablative material than the first removeable member, the ablative material being configured to interact with a hydrogen flame to produce a visual indication of the presence of the hydrogen flame.
Clause 18. The method of clause 17, further comprising determining whether to replace the first removeable member in dependence on the colour of a material visible on the removeable member, wherein the visible colour provides an indication of the quantity of ablative material on the removeable member.
Clause 19. The method of clause 17 or clause 18, wherein the step of removing the first removeable member further includes a step of venting hydrogen via the hydrogen flow path.
Clause 20. A method of manufacturing or replenishing a removeable member according to any of clauses 17 to 19, comprising sealing ablative material to the removeable member with an adhesive material.
Clause 21. An aircraft fuel system incorporating the apparatus of any of clauses 1 to 13, or an aircraft fuel system configured for use in the method of any of clauses 14 to 20.
Clause 22. An aircraft or ground service equipment for use at an airport incorporating an aircraft fuel system according to clause 21.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An apparatus for aiding visual detection of a hydrogen flame, the apparatus comprising a removeable member disposed within the vicinity of a hydrogen flow path and configured to be removeable from the hydrogen flow path, the removeable member comprising a material configured to ablate in the presence of a hydrogen flame, such that interaction of the material and the hydrogen flame provides a visual indicator of the presence of the hydrogen flame.

2. The apparatus according to claim 1, wherein the apparatus is disposed on a vehicle, the vehicle for example being one from a group of an aircraft and a piece of ground support equipment.

3. The apparatus according to claim 2, wherein the hydrogen flow path provides fluid communication between a hydrogen storage tank and a location external of the vehicle outer surface.

4. The apparatus according to any preceding claim, wherein the hydrogen flow path is at least partly defined by a vent having an outlet.

5. The apparatus according to claim 4, wherein the removeable member is disposed in the vicinity of the outlet, and optionally wherein at least part of the removeable member is disposed downstream of the outlet.

6. The apparatus according to claim 4 or claim 5, wherein the outlet is located on an aircraft tail.

7. The apparatus according to any preceding claim, wherein the material configured to ablate in the presence of a hydrogen flame is a material powder and / or the material configured to ablate in the presence of a hydrogen flame is at least 80% elemental carbon by mass.

8. The apparatus according to any preceding claim, wherein the material configured to ablate in the presence of a hydrogen flame is held relative to the removeable member by an adhesive material and / or is in the form of particulate material distributed and held within a resin matrix.

9. The apparatus according to any preceding claim, wherein the removeable member comprises a visually distinct material disposed beneath a region comprising the material configured to ablate in the presence of a hydrogen flame, said visually distinct material having an appearance which is distinct from said region.

10. A method of visually determining the presence or absence of a hydrogen flame caused during hydrogen venting from the fuel system of a vehicle, the vehicle being one of an aircraft and a piece of ground support equipment, the method comprising viewing a region including an outlet of a vent through which the hydrogen is vented, and determining whether a hydrogen flame is present or absent in that region in dependence on the presence or absence of a visual indication caused by interaction between the hydrogen flame and a consumable material which is disposed within the region and which ablates in the presence of a hydrogen flame, and optionally wherein the hydrogen flame is determined as being present in the region in dependence on visual observation of a coloured flame caused by combustion of ablated consumable material.

11. The method of claim 10, wherein the consumable material is located on a removeable member disposed in the vicinity of the outlet of the vent.

12. A method of maintaining a flame detection system, the method comprising
removing a first removeable member from a hydrogen flow path, optionally including a step of venting hydrogen via the hydrogen flow path, and
replacing the first removeable member with a second removeable member,
the second removeable member having a greater quantity of ablative material than the first removeable member, the ablative material being configured to interact with a hydrogen flame to produce a visual indication of the presence of the hydrogen flame.

13. The method of claim 12, further comprising determining whether to replace the first removeable member in dependence on the colour of a material visible on the removeable member, wherein the visible colour provides an indication of the quantity of ablative material on the removeable member.

14. A method of manufacturing or replenishing a removeable member according to any of claims 12 or 13, comprising sealing ablative material to the removeable member with an adhesive material.

15. An aircraft fuel system incorporating the apparatus of any of claims 1 to 9, or being configured for use in the method of any of claims 10 to 14, or an aircraft or ground service equipment for use at an airport incorporating such an aircraft fuel system.
